# EUROPEAN PATENT APPLICATION

(11) **EP 4 372 052 A1**
(43) Date of publication of application: **22.05.2024**
(21) Application number: 22842485.9
(22) Date of filing: 14.07.2022
(51) Int. Cl.: C08L 69/00, C08L 71/02, C08K 5/1539, G02B 6/00

(54) **POLYCARBONATE RESIN COMPOSITION HAVING EXCELLENT OPTICAL CHARACTERISTICS AND MOLDED PRODUCT COMPRISING SAME**

(30) Priority: 15.07.2021 KR 20210093026
(71) Applicant: Samyang Corporation, Jongno-gu Seoul 03129 (KR)
(72) Inventor: AN, Tae Jin, Daejeon 34022 (KR); KIM, Sam Jung, Jeonju-si Jeollabuk-do 54920 (KR); BAE, Do Young, Daejeon 35201 (KR); KWON, Soon Yong, Daejeon 34200 (KR); KANG, Suk Woo, Wonju-si Gangwon-do 26485 (KR)
(74) Representative: Schrell, Andreas
(86) International application number: PCT/KR2022/010289
(87) International publication number: WO 2023/287223

(57) **Abstract**

The present invention relates to a polycarbonate resin composition having excellent optical characteristics and a molded product comprising same and, more specifically, to a polycarbonate resin composition and a molded product comprising the composition, the composition comprising: as a basic resin, a polycarbonate; and, as a plasticizer component, a polyalkylene glycol adduct of an anhydrous sugar alcohol, a biomass-derived material, wherein the composition has excellent optical characteristics and processability as well as enhanced mechanical characteristics, such as tensile strength, and heat resistance.

## Description

### TECHNICAL FIELD

The present invention relates to a polycarbonate resin composition with excellent optical properties and an article comprising the same, and more specifically, the present invention relates to a polycarbonate resin composition which comprises polycarbonate as a base resin and polyalkylene glycol adduct of anhydrosugar alcohol that is a biomass-derived material as a plasticizer component, and has excellent optical properties and processability, and at the same time, excellent mechanical properties such as tensile strength, and heat resistance, and a molded article comprising the same.

### BACKGROUND ART

In order to manufacture light guides used in automobile headlamps, lighting components of various electronic devices, housings, etc. with uniform thickness, a resin with a high melt index is required, and at the same time, the resin should have excellent transmittance, low yellowness index characteristics, good impact resistance, etc. In addition, as the importance of eco-friendliness has recently emerged, there is a need to develop a resin that is eco-friendly, and satisfies the above properties simultaneously and has improved transparency.

Korean Patent No. 10-2234098 discloses a composition containing polycarbonate and carboxylic acid ester of isosorbide with improved rheology and optical properties, but the disclosed material has a transmittance of only 89% at a thickness of 4 mm and also its YI value exceeds 2, and so it has insufficient properties to be used as a light guide.

In addition, Korean Patent No. 10-1608411 discloses an block copolymer of [poly(isosorbide carbonate and aromatic carbonate-aromatic carbonate)]-[polycarbonate] which is eco-friendly and has high biomass-derived material content and good balance between properties of color, moldability, heat resistance, and impact resistance, but the disclosed material is not intended for implementing properties for use as a light guide, such as improving optical characteristics.

Therefore, to overcome the above problems of conventional technologies, it has been requested to develop a resin composition which is eco-friendly while having high transmittance, low yellowness index, and excellent mechanical properties such as moldability, tensile strength etc. and excellent heat resistance, and thus is particularly suitable for light guide application.

### PROBLEMS TO BE SOLVED

The present invention is to resolve the above problems of conventional technologies, and so the purpose of the present invention is to provide a polycarbonate resin composition which is eco-friendly and has excellent optical properties (i.e., high transmittance and low yellowness index) and processability as compared with conventional polycarbonate resin composition, and at the same time, excellent mechanical properties such as tensile strength, and heat resistance, and a molded article (particularly, light guide) comprising the same.

### TECHNICAL MEANS

In order to achieve the above-stated purpose, in an aspect, the present invention provides a thermoplastic resin composition, comprising polycarbonate as a base resin; and polyalkylene glycol adduct of anhydrosugar alcohol as a plasticizer component.

In other aspect, the present invention provides a molded article, preferably a light guide, comprising the thermoplastic resin composition of the present invention.

### EFFECT OF THE INVENTION

The thermoplastic resin composition according to the present invention is eco-friendly and has excellent optical properties (i.e., high transmittance and low yellowness index) and processability as compared with conventional polycarbonate resin composition, and at the same time, excellent mechanical properties such as tensile strength, and heat resistance, and thus a molded article comprising the same can be used suitably for optical application in various industries, and in particular, it can be used very suitably for use as light guide (more concretely, light guide for automobiles, and even more concretely, light guide for automobile headlamp).

### CONCRETE MODE FOR CARRYING OUT THE INVENTION

The present invention is explained in more detail below.

The thermoplastic resin composition of the present invention comprises polycarbonate as a base resin; and polyalkylene glycol adduct of anhydrosugar alcohol as a plasticizer component.

### (1) Base resin: Polycarbonate resin

The polycarbonate resin, which is comprised in the thermoplastic resin composition of the present invention as a base resin, may be an aromatic polycarbonate resin, but there is no special limitation to its kind as long as the technical idea of the present invention can be realized thereby. Any thermoplastic aromatic polycarbonate resin conventionally used in this field can be used.

In an embodiment, the aromatic polycarbonate resin may be prepared from a dihydric phenol, a carbonate precursor and a molecular weight-controlling agent.

The dihydric phenol is one of the monomers constituting the aromatic polycarbonate resin, and it may be a compound represented by the following chemical formula 1. 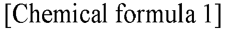 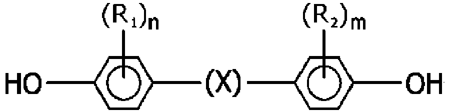 In the above chemical formula 1,
X represents a linear, branched or cyclic alkylene group having no functional group; or a linear, branched or cyclic alkylene group having one or more functional groups selected from the group consisting of sulfide group, ether group, sulfoxide group, sulfone group, ketone group, naphthyl group and isobutylphenyl group (for example, a linear alkylene group having 1 to 10 carbon atoms or a branched alkylene group having 3 to 10 carbon atoms, or a cyclic alkylene group having 3 to 10 carbon atoms);
each of R₁ and R₂ independently represents halogen atom (for example, Cl or Br), a linear, branched or cyclic alkyl group (for example, a linear alkyl group having 1 to 20 (more concretely, 1 to 10) carbon atoms, a branched alkyl group having 3 to 20 (more concretely, 3 to 10) carbon atoms, or a cyclic alkyl group having 3 to 20 (more concretely, 3 to 6) carbon atoms); and
each of m and n independently represents an integer of 0 to 4.

The non-limited example of the above dihydric phenol may be bis(4-hydroxyphenyl)methane, bis(4-hydroxyphenyl)phenylmethane, bis(4-hydroxyphenyl)naphthylmethane, bis(4-hydroxyphenyl)-(4-isobutylphenyl)methane, 1,1-bis(4-hydroxyphenyl)ethane, 1-ethyl-1,1-bis(4-hydroxyphenyl)propane, 1-phenyl-1,1-bis(4-hydroxyphenyl)ethane, 1-naphthyl-1,1-bis(4-hydroxyphenyl)ethane, 1,2-bis(4-hydroxyphenyl)ethane, 1,10-bis(4-hydroxyphenyl)decane, 2-methyl-1,1-bis(4-hydroxyphenyl)propane, or 2,2-bis(4-hydroxyphenyl)propane (bisphenol A), etc., and preferably bisphenol A may be used.

The carbonate precursor is another monomer constituting the aromatic polycarbonate resin, and its non-limited example may be carbonyl chloride (phosgene), carbonyl bromide, bis halo formate, diphenyl carbonate or dimethyl carbonate, etc., and preferably carbonyl chloride (phosgene) may be used.

As the molecular weight-controlling agent, the conventionally known compound, i.e., a monofunctional compound similar to a monomer used in preparation of thermoplastic aromatic polycarbonate resin may be used. The non-limiting examples of the molecular weight-controlling agent may be derivatives based on phenol (for example, para-isopropylphenol, para-tert-butylphenol (PTBP), para-cumylphenol, para-isooctylphenol, para-isononylphenol, etc.) aliphatic alcohols, etc. Preferably, para-tert-butylphenol (PTBP) may be used.

The aromatic polycarbonate resin prepared from such dihydric phenol, carbonate precursor and molecular weight-controlling agent, may be, for example, linear polycarbonate resin, branched polycarbonate resin, copolycarbonate resin, polyestercarbonate resin, etc., and such a resin alone or a mixture of two or more thereof may be used in the present invention.

In an embodiment, the aromatic polycarbonate resin may have a viscosity average molecular weight (Mv, measured in methylene chloride solution at 25°C) of 15,000 to 40,000, more concretely 17,000 to 30,000, and more concretely 20,000 to 30,000. If the viscosity average molecular weight of the aromatic polycarbonate resin is less than 15,000, mechanical properties such as impact strength, tensile strength, etc. may be lowered. To the contrary, if the viscosity average molecular weight of the aromatic polycarbonate resin is greater than 40,000, melt viscosity increases, and thereby problems may be caused in resin processing.

In an embodiment, based on total 100 parts by weight of the thermoplastic resin composition of the present invention, the amount of the polycarbonate base resin in the resin composition may be, for example, 15 parts by weight or more, 20 parts by weight or more, 30 parts by weight or more, 40 parts by weight or more, 45 parts by weight or more, 50 parts by weight or more, 55 parts by weight or more, 60 parts by weight or more, 70 parts by weight or more, 80 parts by weight or more, or 90 parts by weight or more, and it may be 99.9 parts by weight or less, 99.8 parts by weight or less, 99.7 parts by weight or less, 99.6 parts by weight or less, 99.5 parts by weight or less, 99.4 parts by weight or less, 99.3 parts by weight or less, 99.2 parts by weight or less, 99.1 parts by weight or less, or 99 parts by weight or less.

### (2) Plasticizer component: Polyalkylene glycol adduct of anhydrosugar alcohol

The polyalkylene glycol adduct of anhydrosugar alcohol, which is comprised in the thermoplastic resin composition of the present invention as a plasticizer component, is a compound having a form wherein polyalkylene glycol substituent is attached to the terminal hydroxy group of anhydrosugar alcohol.

The anhydrosugar alcohol can be prepared by dehydration reaction of hydrogenated sugar derived from natural product. Hydrogenated sugar (also referred to as "sugar alcohol") means a compound obtained by adding hydrogen to the reductive end group in sugar, and generally has a chemical formula of HOCH₂(CHOH)ₙCH₂OH wherein n is an integer of 2 to 5. According to the number of carbon atoms, hydrogenated sugar is classified into tetritol, pentitol, hexitol and heptitol (4, 5, 6 and 7 carbon atoms, respectively). Among them, hexitol having 6 carbon atoms includes sorbitol, mannitol, iditol, galactitol, etc. and in particular, sorbitol and mannitol are very useful materials.

The anhydrosugar alcohol may be monoanhydrosugar alcohol, dianhydrosugar alcohol or a mixture thereof, and although it is not especially limited, dianhydrosugar alcohol can be used.

Monoanhydrosugar alcohol is an anhydrosugar alcohol formed by removing one molecule of water from inside of the hydrogenated sugar, and it has a tetraol form with four hydroxyl groups in the molecule. In the present invention, the kind of the monoanhydrosugar alcohol is not especially limited, and it may be preferably monoanhydrohexitol, and more concretely 1,4-anhydrohexitol, 3,6-anhydrohexitol, 2,5-anhydrohexitol, 1,5-anhydrohexitol, 2,6-anhydrohexitol or a mixture of two or more of the foregoing.

Dianhydrosugar alcohol is an anhydrosugar alcohol formed by removing two molecules of water from inside of the hydrogenated sugar, and it has a diol form with two hydroxyl groups in the molecule, and can be produced by using hexitol derived from starch. Because dianhydrosugar alcohol is an environmentally friendly material derived from recyclable natural resources, it has received much interest for a long time and researches on its production continue to proceed. Among such dianhydrosugar alcohols, isosorbide produced from sorbitol has the widest industrial applicability at present.

In the present invention, the kind of the dianhydrosugar alcohol is not especially limited, and it may be preferably dianhydrohexitol, and more concretely 1,4:3,6-dianhydrohexitol. 1,4:3,6-dianhydrohexitol may be isosorbide, isomannide, isoidide or a mixture of two or more of the foregoing.

In a preferable embodiment of the present invention, the dianhydrosugar alcohol may be isosorbide.

In an embodiment, the polyalkylene glycol may be polyethylene glycol, polypropylene glycol, polybutylene glycol, or combination thereof.

In an embodiment, the polyalkylene glycol may have a molecular weight (weight average molecular weight) of 500 to 5,000 g/mol, and more concretely 1,000 to 4,000 g/mol, but it is not limited thereto.

In an embodiment, the polyalkylene glycol adduct of anhydrosugar alcohol may be represented by the following formula 2:

[Formula 2] H-[X]ₚ-[O-A-O]-[X']_{q}-H

In the above formula 2,
[O-A-O] is a part derived from anhydrosugar alcohol by removing hydrogen atoms from the both terminal hydroxy groups of the anhydrosugar alcohol,
H-[X]ₚ is independently H-[O-alkylene]ₚ,
[X']_{q}-H is independently [alkylene-O]_{q}-H, and
each of p and q independently represents an integer of 2 to 15.

More concretely, in the above formula 2,
the anhydrosugar alcohol may be isosorbide, and
the alkylene may be a linear alkylene having 2 to 8 carbon atoms or a branched alkylene having 3 to 8 carbon atoms, and more concretely, it may be ethylene, propylene, butylene, or combination thereof, and
each of p and q independently represents an integer of 2 to 12.

In an embodiment, the polyalkylene glycol adduct of anhydrosugar alcohol may be a compound represented by the following formula 3: 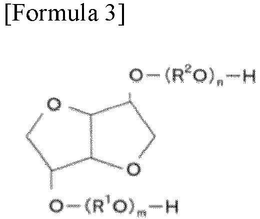 In the above formula 3,
each of R¹ and R² independently represents a linear alkylene group having 2 to 8 carbons or a branched alkylene group having 3 to 8 carbons, and
each of m and n independently represents an integer of 2 to 15.

More concretely, in the above formula 3,
each of R¹ and R² independently represents ethylene group, propylene group, isopropylene group or butylene group, and preferably R¹ and R² are the same, and
each of m and n independently represents an integer of 2 to 12.

In an embodiment, for example, as shown in the following reaction schemes, the polyalkylene glycol adduct of anhydrosugar alcohol may be prepared by reacting the hydroxy group at both ends or one end (preferably both ends) of anhydrosugar alcohol with alkylene oxide in the presence of a catalyst (e.g. a base catalyst), and obtained as a compound having a form wherein the hydrogen of the hydroxy group at both ends or one end (preferably both ends) of the anhydrosugar alcohol is substituted with a hydroxyalkyl group which is a ring-opened form of the alkylene oxide.

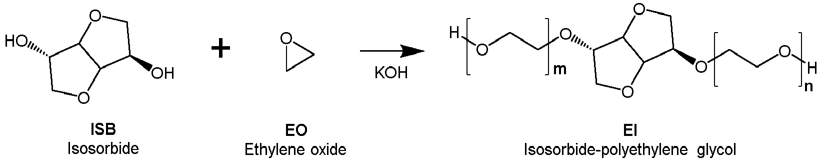

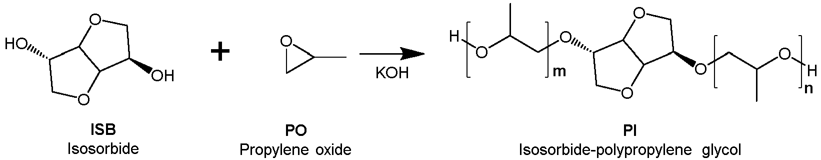

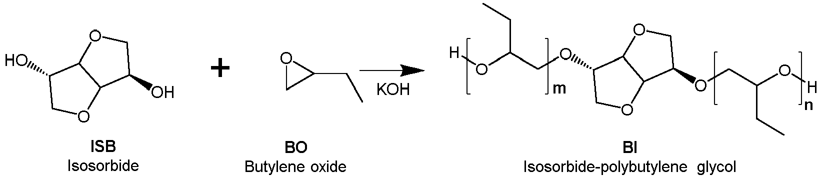

In an embodiment, the alkylene oxide may be a linear alkylene oxide having 2 to 8 carbon atoms or a branched alkylene oxide having 3 to 8 carbon atoms, and more concretely, it may be ethylene oxide, propylene oxide, butylene oxide, or combination thereof

In an embodiment, the anhydrosugar alcohol may be treated with acid component before the reaction with the alkylene oxide, and the reaction of the acid-treated anhydrosugar alcohol with the alkylene oxide may be conducted, for example, in high pressure reactor capable of being pressurized (for example, pressurized to 3MPa or higher) in the presence of base catalyst (for example, alkali metal hydroxide such as sodium hydroxide, potassium hydroxide, etc. or alkaline earth metal hydroxide such as calcium hydroxide, etc.) at an elevated temperature (for example, 100°C to 180°C, or 120°C to 160°C) during a time of, for example, 1 hour to 8 hours, or 2 hours to 4 hours, but it is not limited thereto. The reaction molar ratio of alkylene oxide to 1 mole of anhydrosugar alcohol may be, for example, 1 mole or more, or 2 moles or more, and it may be 30 moles or less, 20 moles or less, 15 moles or less, or 12 moles or less, and for example, it may be 1 mole to 30 moles, preferably 2 to 20 moles, and more preferably 3 to 15 moles, but it is not limited thereto.

In an embodiment, based on total 100 parts by weight of the thermoplastic resin composition of the present invention, the amount of the polyalkylene glycol adduct of anhydrosugar alcohol as a plasticizer component in the resin composition may be, for example, 0.06 part by weight or more, 0.1 part by weight or more, 0.2 part by weight or more, 0.3 part by weight or more, 0.4 part by weight or more, 0.5 part by weight or more, 0.6 part by weight or more, 0.7 part by weight or more, 0.8 part by weight or more, 0.9 part by weight or more, or 1 part by weight or more, and it may be 2.49 parts by weight or less, 2.45 parts by weight or less, 2.4 parts by weight or less, 2.35 parts by weight or less, 2.3 parts by weight or less, 2.25 parts by weight or less, 2.2 parts by weight or less, 2.15 parts by weight or less, 2.1 parts by weight or less, 2.05 parts by weight or less, or 2 parts by weight or less.

If the amount of the polyalkylene glycol adduct of anhydrosugar alcohol in total 100 parts by weight of the thermoplastic resin composition is less than 0.06 part by weight, transmittance decreases and yellowness index increases, and thereby high transmittance may not be realized. To the contrary, if the amount of the polyalkylene glycol adduct of anhydrosugar alcohol in total 100 parts by weight of the thermoplastic resin composition is greater than 2.49 parts by weight, the plasticizer in the composition may be crystallized, and thereby the optical properties may become worse.

### (3) Optional additives

In addition to the above-explained components, within the scope capable of achieving the purpose of the present invention, the thermoplastic resin composition of the present invention may further comprise other additive(s), if necessary.

The kind(s) and amount(s) of such other additive(s) may be easily selected by a skilled artisan according to various purposes. In an embodiment, inorganic filler, lubricant, antioxidant, light stabilizer, hydrolysis stabilizer, releasing agent, colorant, UV stabilizer, antistatic agent, conductivity imparting agent, magnetism imparting agent, crosslinking agent, antibacterial agent, processing aid, anti-friction agent, anti-wear agent or coupling agent may be added alone or as a mixture of two or more to the composition.

As the antioxidant, phenol-type, phosphite-type, thioether-type or amine-type antioxidant may be used, and as the releasing agent, fluorine-containing polymer, silicone oil, a metal salt of stearic acid, a metal salt of montanic acid, montanic acid ester wax, or polyethylene wax may be used. Also, as the UV stabilizer, benzophenone, benzotriazole and amine-type UV stabilizer may be used, and as the colorant, dye or pigment may be used.

For other additive(s) than the above, commercially available general one(s) may be used. The amount of other additive is not especially limited, and for example, it may be, based on total 100 parts by weight of the thermoplastic resin composition of the present invention, 1 to 5 parts by weight, and more concretely 2 to 5 parts by weight, but it is not limited thereto.

The thermoplastic resin composition according to the present invention is eco-friendly because it utilizes anhydrosugar alcohol which is a biomass-derived material, and it has excellent optical properties (i.e., high transmittance and low yellowness index) and processability as compared with conventional polycarbonate resin composition, and at the same time, excellent mechanical properties such as tensile strength, and heat resistance, and thus a molded article comprising the same can be used suitably for optical application in various industries, and in particular, it can be used very suitably for use as light guide (more concretely, light guide for automobiles, and even more concretely, light guide for automobile headlamp).

Therefore, the other aspect of the present invention provides a molded article comprising the thermoplastic resin composition of the present invention.

The molded article may be an extrusion-molded article or an injection-molded article of the thermoplastic resin composition of the present invention.

In a preferable embodiment, the molded article may be a light guide.

The present invention is explained in more detail through the following Examples and Comparative Examples. However, the scope of the present invention is not limited thereby in any manner.

### EXAMPLES

The components used in Examples and Comparative Examples are as follows.
(A) Polycarbonate resin: 3017 PJ of Samyang Corporation
(B) Polycarbonate resin: 1600R of Lotte Chemical Co., Ltd.
(C) [poly(isosorbide carbonate-aromatic carbonate)]-[polycarbonate] block copolymer (copolymer prepared by the method disclosed in Korean Patent No. 10-1608411)
(D) Polyethylene glycol (PEG)
(D-1) PEG-1000 (Molecular weight: 1000 g/mol)
(D-2) PEG-2000 (Molecular weight: 2000 g/mol)
(D-3) PEG-4000 (Molecular weight: 4000 g/mol)
(E) Polypropylene glycol (PPG)
(E-1) PPG-1000 (Molecular weight: 1000 g/mol)
(E-2) PPG-2000 (Molecular weight: 2000 g/mol)
(E-3) PPG-4000 (Molecular weight: 4000 g/mol)
(F) Polybutylene glycol (PBG)
(F-1) PBG-1000 (Molecular weight: 1000 g/mol)
(F-2) PBG-2000 (Molecular weight: 2000 g/mol)
(F-3) PBG-4000 (Molecular weight: 4000 g/mol)
(G) Polyethylene adipate) (AD 2000) (Molecular weight: 8000 g/mol)
(H) Fatty acid diester of isosorbide (ID37, Roquette Pierre Co., Ltd.)
(I) Polyethylene glycol adduct of isosorbide
(1-1) EI-1000 (Molecular weight of polyethylene glycol: 1000 g/mol)
(I-2) EI-2000 (Molecular weight of polyethylene glycol: 2000 g/mol)
(I-3) EI-4000 (Molecular weight of polyethylene glycol: 4000 g/mol)
(1) Polypropylene glycol adduct of isosorbide
(1-1) PI-1000 (Molecular weight of polypropylene glycol: 1000 g/mol)
(J-2) PI-2000 (Molecular weight of polypropylene glycol: 2000 g/mol)
(1-3) PI-4000 (Molecular weight of polypropylene glycol: 4000 g/mol)
(K) Polybutylene glycol adduct of isosorbide
(K-1) BI-1000 (Molecular weight of polybutylene glycol: 1000 g/mol)
(K-2) BI-2000 (Molecular weight of polybutylene glycol: 2000 g/mol)
(K-3) BI-4000 (Molecular weight of polybutylene glycol: 4000 g/mol)

The polyalkylene glycol adducts of isosorbide were prepared in a manner of addition reaction of acid-treated isosorbide and the corresponding alkylene oxide at 100°C to 140°C in the presence of KOH as a catalyst, cooling and filtering of the product, and purification thereof by using ion exchange resin.

The resin compositions were prepared with the components and amounts for each example shown in the following Table 1, and then extruded by using a twin-axes melting-kneading extruder with L/D=48 and Φ=25mm under the conditions of melting temperature of 240 to 260°C, screw rotation speed of 150 rpm, first vent pressure of approximately -600 mmHg, and self-feeding speed of 20 kg/h. The extruded strands were cooled in water and then cut by rotating cutter to prepare pellets.

The prepared pellets were dried with hot air at 80°C to 100°C for 4 hours, and then subjected to injection molding at cylinder temperature of 250°C to 280°C and molding temperature of 80°C to prepare samples. The properties of each sample prepared were measured by the methods explained below, and the results thereof are shown in the following Table 1.

The properties of each sample prepared were measured and evaluated by the following methods.
(1) Tensile strength: Evaluated according to ASTM D638
(2) Flexural strength and elastic modulus: Evaluated according to ASTM D790
(3) Impact strength: Evaluated according to ASTM D256 (1/8 inch thickness, notch-Izod)
(4) Thermal deformation temperature: Evaluated according to ASTM D648 with a load of 18.6 kg/cm²
(5) Melt index: Measured according to ASTM D1238 at a temperature of 300°C with a load of 1.2 kgf
(6) Transmittance: The transmittance (%) value of a square sample (90 x 80 x 6.4 mm) was measured according to ASTM D1003 by using Gardner i Haze Meter of BYK Co., Ltd.
(7) YI (Yellowness Index): The YI value of a square sample (90 x 80 x 6.4 mm) was measured by using a spectrophotometer CI 7800SE of X-rite Co., Ltd.

**[Table 1]**

| | | Examples | | | | | | | | | | | | |
|---|---|---|---|---|---|---|---|---|---|---|---|---|---|---|
| | | 1-1 | 1-2 | 1-3 | 1-4 | 2-1 | 2-2 | 2-3 | 2-4 | 3-1 | 3-2 | 3-3 | 3-4 | 3-5 |
| Base resin (part by weight) | (B) | 99 | 98.5 | 99 | 99 | 99 | 98.5 | 99 | 99 | 99 | 98.5 | 98 | 99 | 99 |
| Plasticizer (part by weight) | (I-1) | 1 | 1.5 | | | | | | | | | | | |
| | (I-2) | | | 1 | | | | | | | | | | |
| | (I-3) | | | | 1 | | | | | | | | | |
| | (J-1) | | | | | 1 | 1.5 | | | | | | | |
| | (J-2) | | | | | | | 1 | | | | | | |
| | (J-3) | | | | | | | | 1 | | | | | |
| | (K-1) | | | | | | | | | 1 | 1.5 | 2 | | |
| | (K-2) | | | | | | | | | | | | 1 | |
| | (K-3) | | | | | | | | | | | | | 1 |
| Tensile strength (MPa) | | 65 | 66 | 66 | 67 | 67 | 68 | 67 | 68 | 68 | 69 | 71 | 69 | 69 |
| Flexural strength (MPa) | | 95 | 100 | 96 | 97 | 100 | 105 | 103 | 105 | 110 | 115 | 115 | 115 | 120 |
| Elastic modulus (MPa) | | 2500 | 2520 | 2520 | 2540 | 2500 | 2550 | 2560 | 2550 | 2550 | 2580 | 2600 | 2550 | 2580 |
| Impact strength (J/m) | | 60 | 65 | 62 | 60 | 67 | 65 | 67 | 66 | 55 | 65 | 54 | 54 | 54 |
| Thermal deformation temperature (°C) | | 126 | 125 | 126 | 125 | 127 | 124 | 127 | 127 | 128 | 124 | 125 | 128 | 128 |
| Melt index (g/min.) | | 53 | 57 | 54 | 53 | 58 | 58 | 57 | 57 | 57 | 59 | 64 | 56 | 57 |
| Transmittance (%) | | 89.5 | 90.1 | 89.7 | 89.7 | 91 | 91.4 | 91.3 | 91.6 | 91.8 | 92 | 90.5 | 91.9 | 91.9 |
| YI | | 1.48 | 1.45 | 1.42 | 1.37 | 1.4 | 1.35 | 1.38 | 1.3 | 1.22 | 1.12 | 1.2 | 1.21 | 1.19 |

**[Table 1] (continued)**

| | | Comparative Examples | | |
|---|---|---|---|---|
| | | a | b | c |
| Base resin (part by weight) | (A) | 100 | | |
| | (B) | | 100 | |
| | (C) | | | 100 |
| Plasticizer (part by weight) | | | | |
| | | | | |
| | | | | |
| Tensile strength (MPa) | | 60 | 61 | 66 |
| Flexural strength (MPa) | | 85 | 87 | 95 |
| Elastic modulus (MPa) | | 2250 | 2360 | 2550 |
| Impact strength (J/m) | | 620 | 610 | 320 |
| Thermal deformation temperature (°C) | | 128 | 128 | 129 |
| Melt index (g/min.) | | 42 | 50 | 20 |
| Transmittance (%) | | 87.1 | 88.4 | 86.9 |
| YI | | 2.61 | 1.91 | 3.21 |

**[Table 1] (continued)**

| | | Comparative Examples | | | | | | | | | | | | | | |
|---|---|---|---|---|---|---|---|---|---|---|---|---|---|---|---|---|
| | | 1-1 | 1-2 | 1-3 | 1-4 | 2-1 | 2-2 | 2-3 | 2-4 | 3-1 | 3-2 | 3-3 | 3-4 | 3-5 | 4-1 | 4-2 |
| Base resin (part by weight) | (B) | 99 | 98.5 | 99 | 99 | 99 | 98.5 | 99 | 99 | 99 | 98.5 | 98 | 99 | 99 | 98.5 | 98.5 |
| Plasticizer (part by weight) | (D-1) | 1 | 1.5 | | | | | | | | | | | | | |
| | (D-2) | | | 1 | | | | | | | | | | | | |
| | (D-3) | | | | 1 | | | | | | | | | | | |
| | (E-1) | | | | | 1 | 1.5 | | | | | | | | | |
| | (E-2) | | | | | | | 1 | | | | | | | | |
| | (E-3) | | | | | | | | 1 | | | | | | | |
| | (F-1) | | | | | | | | | 1 | 1.5 | 2 | | | | |
| | (F-2) | | | | | | | | | | | | 1 | | | |
| | (F-3) | | | | | | | | | | | | | 1 | | |
| | (G) | | | | | | | | | | | | | | 1.5 | |
| | (H) | | | | | | | | | | | | | | | 1.5 |
| Tensile strength (MPa) | | 62 | 62 | 63 | 64 | 61 | 62 | 61 | 62 | 62 | 64 | 65 | 64 | 65 | 62 | 62 |
| Flexural strength (MPa) | | 89 | 93 | 91 | 92 | 90 | 105 | 95 | 100 | 105 | 110 | 110 | 110 | 110 | 93 | 90 |
| Elastic modulus (MPa) | | 2300 | 2400 | 2380 | 2400 | 2400 | 2480 | 2450 | 2480 | 2490 | 2500 | 2500 | 2520 | 2540 | 250 0 | 2400 |
| Impact strength (J/m) | | 60 | 65 | 61 | 60 | 67 | 65 | 64 | 64 | 60 | 62 | 60 | 59 | 55 | 67 | 60 |
| Thermal deformation temperature (°C) | | 125 | 122 | 126 | 127 | 122 | 122 | 122 | 123 | 124 | 121 | 121 | 125 | 125 | 126 | 122 |
| Melt index (g/min.) | | 48 | 55 | 47 | 45 | 51 | 56 | 50 | 50 | 50 | 58 | 60 | 48 | 49 | 55 | 50 |
| Transmittance (%) | | 88.7 | 89.1 | 89 | 88.9 | 90 | 90.3 | 90.2 | 80.2 | 90.8 | 91.6 | 89.2 | 91.1 | 91.2 | 90.6 | 88 |
| YI | | 1.85 | 1.67 | 1.81 | 1.72 | 1.46 | 1.42 | 1.44 | 1.44 | 1.37 | 1.32 | 1.35 | 1.32 | 1.32 | 1.39 | 3.12 |

As shown in Table 1 above, all of Examples 1-1 to 3-5 according to the present invention had excellent optical properties (i.e., high transmittance and low yellowness index) and excellent processability (high melt index), and at the same time, the mechanical properties such as tensile strength, flexural strength, elastic modulus and impact strength and heat resistance were also excellent so that well-balanced properties were secured.

Concretely, Examples 1-1 to 3-5, which were the polycarbonate compositions with excellent optical properties of the present invention, maintained the mechanical properties and optical properties that were suitable for use as light guide for automobiles, and in particular, it could be confirmed that the compositions of Examples 3-4 and 3-5 showed optical properties very suitable for parts of such application, and improved optical properties and mechanical properties that could be used as light guide for automobile headlamp.

However, in case of Comparative Examples, one or more of the measured and evaluated items above were poor. That is, in case of not using a polyalkylene glycol adduct of anhydrous sugar alcohol as a plasticizer component, i.e., Comparative Examples 1-1 to 3-5 using simple polyalkylene glycol, Comparative Example 4-1 using poly(ethylene adipate) and Comparative Example 4-2 using fatty acid diester of isosorbide, it could be confirmed that the mechanical properties were lowered because of the absence of alicyclic functional group imparting rigidity, or the optical properties were very poor because of the absence of polyalkylene glycol providing compatibility with resin.

## Claims

1. A thermoplastic resin composition, comprising:
polycarbonate as a base resin; and
polyalkylene glycol adduct of anhydrosugar alcohol as a plasticizer component.

2. The thermoplastic resin composition of claim 1, wherein the polycarbonate resin is an aromatic polycarbonate resin.

3. The thermoplastic resin composition of claim 1, wherein the anhydrosugar alcohol is isosorbide.

4. The thermoplastic resin composition of claim 1, wherein the polyalkylene glycol is polyethylene glycol, polypropylene glycol, polybutylene glycol, or combination thereof.

5. The thermoplastic resin composition of claim 1, wherein the polyalkylene glycol has a molecular weight of 500 to 5,000 g/mol.

6. The thermoplastic resin composition of claim 1, wherein the polyalkylene glycol adduct of anhydrosugar alcohol is represented by the following formula 2:
[Formula 2] H-[X]ₚ-[O-A-O]-[X']_{q}-H
in the above formula 2,
[O-A-O] is a part derived from anhydrosugar alcohol by removing hydrogen atoms from the both terminal hydroxy groups of the anhydrosugar alcohol,
H-[X]ₚ is independently H-[O-alkylene]ₚ,
[X']_{q}-H is independently [alkylene-O]_{q}-H, and
each of p and q independently represents an integer of 2 to 15.

7. The thermoplastic resin composition of claim 1, wherein the polyalkylene glycol adduct of anhydrosugar alcohol is represented by the following formula 3: 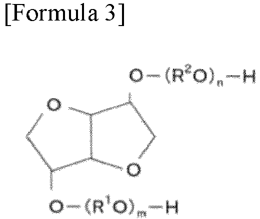 in the above formula 3,
each of R¹ and R² independently represents a linear alkylene group having 2 to 8 carbons or a branched alkylene group having 3 to 8 carbons, and
each of m and n independently represents an integer of 2 to 15.

8. The thermoplastic resin composition of claim 1, which comprises the polyalkylene glycol adduct of anhydrosugar alcohol in an amount of from 0.06 part by weight to 2.49 parts by weight, based on total 100 parts by weight of the thermoplastic resin composition.

9. A molded article comprising the thermoplastic resin composition of any one of claims 1 to 8.

10. The molded article of claim 9, which is a light guide.
